# EUROPÄISCHE PATENTSCHRIFT

(11) **EP 3 599 214 B1**
(45) Veröffentlichungstag und Bekanntmachung des Hinweises auf die Patenterteilung: **26.07.2023**
(21) Anmeldenummer: 18000996.1
(22) Anmeldetag: 21.12.2018
(51) Int. Cl.: B66F 9/075, B66F 9/24, G01S 13/87

(54) **VORRICHTUNG ZUR RÄUMLICHEN ORIENTIERUNG, EIN ORIENTIERUNGSMITTEL, EINE DETEKTIONSVORRICHTUNG, EINE VERWENDUNG UND EIN VERFAHREN**
DEVICE FOR SPATIAL ORIENTATION, AN ORIENTATION MEANS, A DETECTION DEVICE, USE AND METHOD
DISPOSITIF D'ORIENTATION SPATIALE, DISPOSITIF D'ORIENTATION, DISPOSITIF DE DÉTECTION, UTILISATION ET PROCÉDÉ

(30) Priorität: 23.07.2018 DE 102018005748
(43) Veröffentlichungstag der Anmeldung: 29.01.2020
(73) Patentinhaber: INRO Elektrotechnik GmbH, 63811 Stockstadt (DE)
(72) Erfinder: Kairlas, Maximos, D-63811 Stockstadt (DE); Ries, Michael, D-63811 Stockstadt (DE)
(74) Vertreter: Eisenführ Speiser

(56) Entgegenhaltungen:
- US-A1- 2005 052 281
- US-A1- 2011 315 765
- US-A1- 2016 327 952
- US-B1- 9 715 609

## Beschreibung

Die Erfindung betrifft eine Vorrichtung zur räumlichen Orientierung für ein bewegtes Objekt, insbesondere ein Fahrzeug, nach dem Oberbegriff von Anspruch 1, ein Orientierungsmittel für ein bewegtes Objekt, insbesondere ein Fahrzeug, eine Detektionsvorrichtung, eine Verwendung einer Vorrichtung zur räumlichen Orientierung für ein bewegtes Objekt, insbesondere ein Fahrzeug, nach dem Oberbegriff von Anspruch 12 und ein Verfahren.

Bekannte RFID-Sensor-Systeme umfassen einen RFID-Transponder, auch "Tag" genannt, der Daten, die auf einem internen Mikrochip gespeichert sind, mit Hilfe einer Antenne in einer Transponderfrequenz aussendet, sowie ein Detektionsgerät zum Detektieren der Transponderfrequenz. Mit einem elektromagnetischen Feld werden Signale vom Detektionsgerät erzeugt und an den RFID-Transponder übermittelt, so dass diese von der Transponderantenne empfangen werden. Von dort werden sie weiter an den Mikrochip geleitet. Der RFID-Transponder verändert das elektromagnetische Feldsignal des Detektionsgeräts in Abhängigkeit von seiner Speicherinformation und sendet dieses zurück, so dass das Detektionsgerät die Speicherinformationen empfangen kann. Bekannt sind funkbasierte RFID-Lösungen mit einem passiven RFID-Transponder als Speicherelement und einer zugehörigen Auswerteeinheit, die vielfach im Einsatz sind. Neben der Auswertung der im RFID-Speicher hinterlegten digitalen Informationen werden diese Systeme beispielsweise im Bereich der Warenströme, zur Eingangskontrolle oder anderen Bereichen eingesetzt.

US 2016/0327952 A1 offenbart ein Layout für Fahrwege von Gabelstaplern in Industrieanlagen basierend auf RFID Tags. Dafür wird eine Vorrichtung zur Orientierung für ein bewegtes Objekt in Form eines Gabelstaplers unter Verwendung unter anderem eines ersten RFID-Transponders, eines zweiten RFID-Transponders, eines ersten Detektionsmittels und eines zweiten Detektionsmittels beschrieben. US 2016/0327952 A1 offenbart eine Vorrichtung gemäß dem Oberbegriff des unabhängigen Anspruchs 1.

US 2005/0052281 A1 offenbart ein System zur Standortbestimmung von Fahrzeugen für den Transport von Gegenständen innerhalb eines kontrollierten Bereichs, unter anderem auf Basis einer Vielzahl von RFID-Transpondern, eines ersten Detektionsmittels und eines zweiten Detektionsmittels. Das erste und das zweite Detektionsmittel sind räumlich beabstandet an dem Fahrzeug angeordnet, um die Position des Fahrzeuges nachzuverfolgen. Die verwendeten Tags sind gleich beschaffen, damit sie sowohl von dem ersten als auch von dem zweiten Detektionsmittel ausgelesen werden können.

US 9,715,609 B1 offenbart eine Vorrichtung zur Orientierung für ein bewegtes Objekt, auch in größerer Distanz, unter anderem unter Verwendung mehrerer RFID-Transponder mit charakteristischen Abstrahlmustern und unter Verwendung je eines Detektionsmittels zur Orientierung je eines bewegten Objektes.

Nachteilig ist es, dass in Verbindung mit höheren Sicherheitsanforderungen an bewegten Maschinen insbesondere keine ausreichende Schnelligkeit und Genauigkeit der bekannten RFID-Lösungen gegeben ist.

Aufgabe der vorliegenden Erfindung ist es, eine einfache, sichere und schnelle Vorrichtung zur Orientierung für bewegte Objekte, insbesondere Fahrzeuge, insbesondere Flurförderfahrzeuge, insbesondere Gabelstapler, bereitzustellen.

Die Aufgabe wird gelöst durch eine Vorrichtung zur räumlichen Orientierung für ein bewegtes Objekt, insbesondere ein Fahrzeug, insbesondere ein Flurförderfahrzeug, insbesondere Gabelstapler, umfassend zumindest einen ersten RFID-Transponder mit einer ersten Transponderfrequenz, zumindest einen zweiten RFID-Transponder mit einer zweiten Transponderfrequenz, der dem ersten RFID-Transponder zugeordnet ist, zumindest ein erstes Detektionsmittel zum Detektieren des ersten RFID-Transponders mit der ersten Transponderfrequenz, zumindest ein zweites Detektionsmittel zum Detektieren des zweiten RFID-Transponders mit der zweiten Transponderfrequenz, das dem ersten Detektionsmittel zugeordnet ist, wobei eine Detektion des ersten RFID-Transponders und/oder des zweiten RFID-Transponders durch das erste Detektionsmittel und/oder das zweite Detektionsmittel im Wesentlichen örtlich und/oder zeitlich miteinander korreliert ausgebildet ist als abgesichertes Orientierungsmittel für das bewegte Objekt, insbesondere Fahrzeug, insbesondere ein Flurförderfahrzeug, insbesondere Gabelstapler, wobei zwischen der zweiten Transponderfrequenz des zweiten RFID-Transponders und der ersten Transponderfrequenz des ersten RFID-Transponders eine Frequenzdifferenz besteht.

Die vorliegende Erfindung ermöglicht eine genaue Orientierung für ein Fahrzeug in Verbindung mit einer abgesicherten Nutzung der Transponderfrequenzsignale, insbesondere der Transponderpositionen, mit hoher Genauigkeit und mehrfach abgesicherter Datenübertragung an das/die Detektionsmittel. Es findet keine unerwünschte, störende Wechselwirkung zwischen den Transpondersignalen statt. Die Erfindung erlaubt durch eine kompakte Anordnung und räumliche Zuordnung eine abgesicherte, doppelt verifizierte Auswertung und eine räumliche und zeitliche Orientierung für das bewegte Objekt, insbesondere Fahrzeug, wobei ein definierter Zusammenhang des Signalgehalts erhalten bleibt ohne unerwünschte Störungen untereinander. Es wird eine Nutzung eines zwei oder mehrkanaligen RFID-Systems als robustes, sicheres Sensorsystem vorgeschlagen, insbesondere mit Speicherfunktionalität, das auch für Maschinenanwendungen geeignet ist, die einen hohen Performancelevel im Sinne der Absicherung der Datenübertragung erfordern. Die Vorrichtung umfasst zumindest einen, oder auch mehrere kompakte Mehrfachtransponder mit zwei, oder auch mehreren Frequenzkanälen, wobei diese beispielhaft jeweils ein Transponder, ein Receiver und ein Mikrokontroller aufweisen und über eine Sicherheitseinheit kontrolliert werden können, zur Gewährleistung einer schnellen Wegbestimmung und/oder Positionsbestimmung für das Fahrzeug, insbesondere ist aus Experimenten eine Auswertung der Transponderinformation bis Überfahrgeschwindigkeiten insbesondere auch größer als 20km/h möglich. Weiterhin ist hierdurch eine kostengünstige Konstruktion und Montage in der Endapplikation gegeben. Eine Positionserkennung der Transponder als Bodenmarken und/oder in seitlicher Anordnung relativ zur Detektionseinheit durch Auswertung der ortsabhängigen Eigenschaften der Informationsübertragung ist ermöglicht. Durch den extrem kompakten kombinierten Transponder ist eine Verbesserung der Messgenauigkeit der Positionsbestimmung gegeben, was insbesondere für Fahrzeuganwendungen innerhalb von abgegrenzten Bewegungsräumen vorteilhaft ist. Andere Möglichkeiten umfassen eine Einstellung auf einen vorbestimmten Abstand bei den RFID-Transponder, insbesondere einige cm und/oder durch einen vorbestimmten Versatz der Detektionseinrichtungen, wodurch eine weiter optimierte Positionsbestimmung erreicht werden kann. Das RFID-System dient der Identifizierung der RFID-Transponder innerhalb einer vorgegebenen Reichweite, und gewährleistet, dass mehrere RFID-Transponder innerhalb der Reichweite des Lesegeräts gleichzeitig verwaltet und/oder ausgewertet werden können und kann zudem eine Fehlererkennung ausführen. Durch eine UND-Verbindung der Kanäle ist insbesondere ein Kreuzvergleich möglich. Die Objektidentifikation erfolgt somit auch in einer größeren Distanz zwischen den Detektionsgeräten und den Transpondern und ist auch bei größeren Bewegungsgeschwindigkeiten der Objekte sicher möglich.

Vorteilhaft ist es, wenn der erste RFID-Transponder und der zweite RFID-Transponder in einem vorbestimmten, geringen Abstand, insbesondere einige cm, insbesondere weniger als 10 mm, zueinander angeordnet sind, so dass ein im Wesentlichen zeitgleiches und/oder vorbestimmt beabstandetes Detektieren durch die Detektionsmittel ermöglicht ist, und/oder die RFID-Transponder insbesondere ineinander verschachtelt und/oder übereinander angeordnet sind, insbesondere übereinander an einem gemeinsamen Ferritkern angeordnet sind.

Vorteilhaft ist es, wenn die erste Transponderfrequenz eine Niederfrequenz und die zweite Transponderfrequenz eine Hochfrequenz umfasst, insbesondere etwa 125 kHz und etwa 13,56 MHz. Durch den kombinierten, insbesondere Dualtransponder und insbesondere eine vertikale Magnetfeldkonzentration oder weiterer Realisierungsvarianten vertikal übereinander oder vertikal nebeneinander oder auf gemeinsamen Ferritkern wird die Genauigkeit der Detektion stark erhöht. Insbesondere werden Kombinationen von Transpondern auch unterschiedlicher Frequenzen verwendbar, insbesondere beispielsweise eine Niedrigfrequenz mit geringen Übertragungsraten und Übertragungsabstände, aber einfachem Aufbau und daher kostengünstig in Kombination mit einer Hochfrequenz. Die RFID-Transponder arbeiten bei der Niederfrequenz im Nahfeld der elektromagnetischen Wellen, und können somit durch induktive Kopplung passiv mit Energie versorgt werden. Die Auswertung der Empfangsstärke der Transponder ermöglicht eine genaue Detektion ihrer Position. Die Hochfrequenz hingegen kann universell für Nahfeld oder entferntes Feld eingesetzt werden und zeichnet sich durch hohe Übertragungsraten sowie eine hohe Taktfrequenz aus. Da kein direkter Sichtkontakt zur Basiseinheit bestehen muss, ist die Technik zur Erzeugung und Auswertung von RFID-Transpondern mit Hochfrequenz zwar aufwendiger aber auch flexibler einsetzbar mit sehr hohen Übertragungsgeschwindigkeiten und Entfernungen bis zu 30 Metern.

Vorteilhaft ist es, wenn der erste RFID-Transponder und/oder der zweite RFID-Transponder in einem Bodenbereich vorgesehen sind, insbesondere unter einen Oberflächenfahrbereich versenkt, und/oder in einen Seitenbereich, insbesondere in einer Höhe, die mit einem Detektionsmittel korrespondiert und/oder in einem Deckenbereich.

Vorteilhaft ist es, wenn das erste Detektions- mittel und/oder zweite Detektionsmittel einen ersten Receiver und zweiten Receiver aufweisen, die insbesondere ineinander verschränkt angeordnet sind, insbesondere in Form einer äußeren Spule und einer inneren Spule.

Vorteilhaft ist es, wenn das erste Detektions- mittel und/oder zweite Detektionsmittel jeweils zumindest einen ersten Mikrokontroller und/oder einen zweiten Mikrokontroller aufweisen und/oder die Ergebnisse des ersten Detektionsmittels und/oder zweiten Detektions- mittels über ein erstes Kontrollmittel und/oder zweites Kontrollmittel zur Überprüfung mittels einer Überkreuzverschaltung zu überprüfen sind, insbesondere integriert in die Detektionsmittel oder als ergänzte Sicherheitsmoduleinheit und/oder das erste Detektionsmittel und/oder zweite Detektionsmittel ein erstes und/oder zweites Sendemittel für die erste Transponderfrequenz und/oder zweite Transponderfrequenz zum Senden an den ersten RFID-Transponder und/oder zweiten RFID-Transponder aufweisen.

Vorteilhaft ist es, wenn ein erstes Auswertemittel und/oder ein zweites Auswertemittel in dem ersten und/oder zweiten Detektionsmittel zur Auswertung einer Signalstärke eines ersten und/oder zweiten Transpondersignals mit der ersten und/oder zweiten Transponderfrequenz vorgesehen ist, insbesondere Mikrokontroller, wobei eine ortsabhängige Kopplung zwischen dem ersten und/oder zweiten RFID-Transponder und dem Auswertemittel vornehmbar ist, insbesondere mittels einer Signalauswertung zur Bestimmung von Positionen des ersten und/oder zweiten Transpondermittels. Vorteilhaft kann somit eine Auswertung der Empfangsstärke des Datensignals durch die ortsabhängige Kopplung zwischen Transponder und Auswerteeinheit erfolgen. Aus dem bekannten, charakteristischen Verlauf der Ortsabhängigkeit wird mittels eines angepassten Berechnungsverfahrens auf die Position des Transponders geschlossen.

Schwankungen/Verfälschungen des ortsabhängigen Verlaufs durch äußere Einflüsse werden durch das nur einseitig geöffnete Metallgehäuse der Auswerteeinheit minimiert, insbesondere auch in metallischer Umgebung wie einem Fahrzeug.

Die Aufgabe wird ebenfalls gelöst durch ein Orientierungsmittel für ein bewegtes Objekt, insbesondere ein Fahrzeug, insbesondere ein Flurförderfahrzeug, ins- besondere einen Gabelstapler, angeordnet insbesondere in einem Bodenbereich, insbesondere versenkt und/oder in einer seitlichen Anbringung und/oder Deckenanbringung umfassend einen ersten RFID-Transponder mit einer ersten Transponderfrequenz und einen zweiten RFID-Transponder mit einer zweiten Transponderfrequenz, wobei der erste RFID-Transponder und der zweite RFID-Transponder in einem vorbestimmten, geringen Abstand zueinander angeordnet sind, insbesondere ineinander verschachtelt und/oder übereinander angeordnet sind, insbesondere übereinander an einem Ferritkern, wobei zwischen der ersten Transponderfrequenz und zweiten Transponderfrequenz eine Frequenzdifferenz besteht, insbesondere dass die erste Transponderfrequenz eine Niederfrequenz und die zweite Transponderfrequenz eine Hochfrequenz umfasst, insbesondere etwa 125 kHz und etwa 13,56 MHz und/oder der erste RFID-Transponder und/oder der zweite RFID-Transponder in einem Bodenbereich vorgesehen sind, insbesondere unter einen Oberflächenfahrbereich versenkt, und/oder in einen Seitenbereich und/oder Deckenbereich.

Die Aufgabe wird ebenfalls gelöst durch eine Detektionsvorrichtung umfassend ein erstes Detektionsmittel zum Detektieren eines ersten RFID-Transponders mit einer ersten Transponderfrequenz, zumindest ein zweites Detektionsmittel zum Detektieren eines zweiten RFID-Transponders mit einer zweiten Transponderfrequenz, das dem ersten Detektionsmittel zugeordnet ist, wobei das erste Detektionsmittel und/oder zweite Detektionsmittel ineinander verschränkt angeordnet ist, insbesondere einen ersten Receiver und zweiten Receiver aufweisen, die ineinander angeordnet sind, insbesondere in Form einer äußeren Spule und einer inneren Spule, wobei das erste Detektionsmittel und/oder zweite Detektionsmittel insbesondere jeweils zumindest einen Mikrokontroller aufweisen und/oder die Ergebnisse des ersten und/oder zweiten Detektionsmittels über ein Kontrollmittel zur Überprüfung mittels einer Überkreuzverschaltung zu überprüfen sind, insbesondere integriert zu den Detektionsmitteln oder als ergänzte Sicherheitsmoduleinheit und/oder das erste und/oder zweite Detektionsmittel ein erstes und/oder zweites Sendemittel für die erste und/oder zweite Transponderfrequenz zum Senden an den ersten und/oder zweiten RFID-Transponder aufweisen, wobei zwischen der zweiten Transponderfrequenz des zweiten RFID-Transponders und der ersten Transponderfrequenz des ersten RFID-Transponders eine Frequenzdifferenz besteht.

Vorteilhaft ist es, wenn eine Detektionsvorrichtung in einem im Wesentlichen einseitig, zu den RFID-Transpondern hin geöffneten Metallboxmittel angeordnet ist. Durch diesen Aufbau wird eine gute Abschirmung gegen insbesondere wechselnde, insbesondere bewegte, äußere Felder, insbesondere schnell auftretende Abschirmungsänderungen in der Umgebung durch eine Bewegung des Objekts erreicht.

Die Aufgabe wird ebenfalls gelöst durch Verwendung einer Vorrichtung zur räumlichen Orientierung für bewegte Objekte, insbesondere Fahrzeuge, insbesondere Gabelstapler, umfassend zumindest einen ersten RFID-Transponder mit einer ersten Transponderfrequenz, zumindest einen zweiten RFID-Transponder mit einer zweiten Transponderfrequenz, der dem ersten RFID-Transponder zugeordnet ist, zumindest ein erstes Detektionsmittel zum Detektieren des ersten RFID-Transponders mit der ersten Transponderfrequenz, zumindest ein zweites Detektionsmittel zum Detektieren des zweiten RFID-Transponders mit der zweiten Transponderfrequenz, das dem ersten Detektionsmittel zugeordnet ist, wobei eine Detektion des ersten RFID-Transponders und/oder des zweiten RFID-Transponders durch das erste Detektionsmittel und/oder das zweite Detektionsmittel im Wesentlichen örtlich und/oder zeitlich miteinander korreliert ausgebildet ist als abgesichertes Orientierungsmittel für das bewegte Objekt, insbesondere Fahrzeug, wobei zwischen der zweiten Transponderfrequenz des zweiten RFID-Transponders und der ersten Transponderfrequenz des ersten RFID-Transponders eine Frequenzdifferenz besteht.

Die Aufgabe wird ebenfalls gelöst durch ein Verfahren zum Detektieren unter Verwendung einer Vorrichtung zur räumlichen Orientierung für ein bewegtes Objekt, insbesondere ein Fahrzeug, insbesondere Gabelstapler, nach einem der Ansprüche 1 bis 8, umfassend zumindest einen ersten RFID-Transpondermit einer ersten Transponderfrequenz, zumindest einen zweiten RFID-Transponder mit einer zweiten Transponderfrequenz, der dem ersten RFID-Transponder zugeordnet ist, zumindest ein erstes Detektionsmittel zum Detektieren des ersten RFID-Transponders mit der ersten Transponderfrequenz, zumindest ein zweites Detektionsmittel zum Detektieren des zweiten RFID-Transponders mit der zweiten Transponderfrequenz, das dem ersten Detektionsmittel zugeordnet wird, wobei zwischen der zweiten Transponderfrequenz des zweiten RFID-Transponders und der ersten Transponderfrequenz des ersten RFID-Transponders eine Frequenzdifferenz besteht, wobei durch eine Detektion des ersten RFID-Transponders und/oder des zweiten RFID-Transponders durch das erste Detektionsmittel und/oder das zweite Detektionsmittel eine im Wesentlichen örtliche und/oder zeitliche Bestimmung und Abgleich von Zeit- und/oder Ortsfunktionen der RFID-Transponder vorgenommen wird als abgesichertes Orientierungsmittel für das bewegte Objekt, insbesondere Fahrzeug, wobei eine Detektion der Transponderfrequenzsignale insbesondere durch zwei ineinander und/oder übereinander angeordneten Spulen, insbesondere auf einem Ferritkern angeordnet, vorgenommen wird.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1a: eine erfindungsgemäße Vorrichtung zur räumlichen Orientierung,
- Fig. 1b: einen Ausschnitt einer erfindungsgemäßen Vorrichtung,
- Fig. 1c: einen Ausschnitt einer erfindungsgemäßen Vorrichtung,
- Fig. 2a: eine schematische Darstellung einer erfindungsgemäße Vorrichtung zur räumlichen Orientierung,
- Fig. 2b: eine schematische Darstellung einer erfindungsgemäße Vorrichtung zur räumlichen Orientierung,
- Fig. 3a: eine erfindungsgemäße Vorrichtung und
- Fig. 3b: eine erfindungsgemäße Vorrichtung.

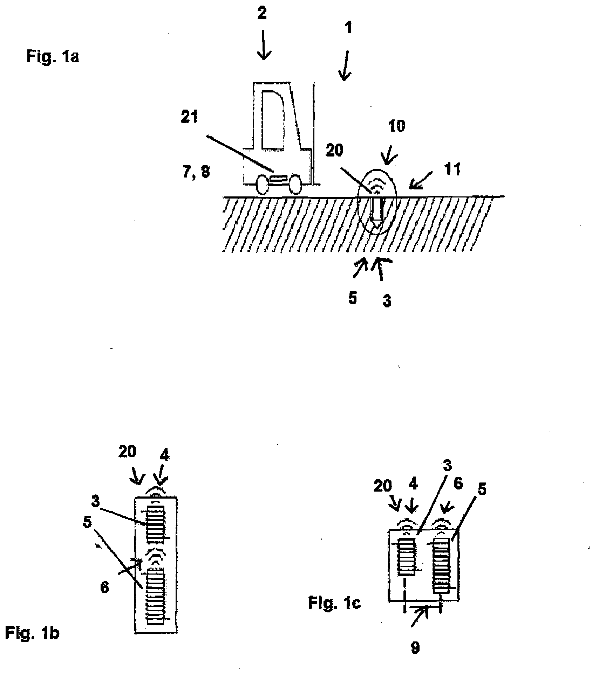

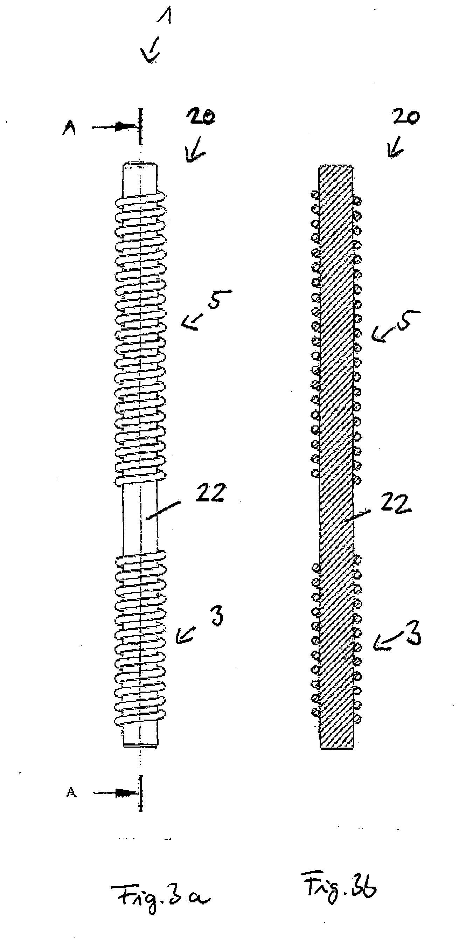

Fig. 1a zeigt eine erfindungsgemäße Vorrichtung 1 zur räumlichen Orientierung für ein bewegtes Objekt, insbesondere ein Fahrzeug, insbesondere Gabelstapler 2, umfassend zumindest einen ersten RFID-Transponder 3 mit einer ersten Transponderfrequenz4, beispielsweise in Fig. 1b und/oder 1c, zumindest einen zweiten RFID-Transponder 5 mit einer zweiten Transponderfrequenz 6, beispielsweise in Fig. 1b und/oder 1c, der dem ersten RFID-Transponder 3 zugeordnet ist, zumindest ein erstes Detektionsmittel 7 zum Detektieren des ersten RFID-Transponders 3 mit der ersten Transponderfrequenz 4, zumindest ein zweites Detektionsmittel 8 zum Detektieren des zweiten RFID-Transponders 5 mit der zweiten Transponderfrequenz 6, das dem ersten Detektionsmittel 7 zugeordnet ist, wobei eine Detektion des ersten RFID-Transponders 3 und/oder des zweiten RFID-Transponders 5 durch das erste Detektionsmittel 7 und/oder das zweite Detektionsmittel 8 im Wesentlichen örtlich und/oder zeitlich miteinander korreliert ausgebildet ist als abgesichertes Orientierungsmittel für das bewegte Objekt, insbesondere Fahrzeug, wobei der erste RFID-Transponder 3 und der zweite RFID-Transponder 5 in einem vorbestimmten, geringen Abstand 9, insbesondere weniger als 10 mm, zueinander angeordnet sind, so dass ein im Wesentlichen zeitgleiches Detektieren durch die Detektionsmittel 7, 8 ermöglicht ist, und/oder die RFID-Transponder 3, 5 insbesondere ineinander verschachtelt und/oder übereinander angeordnet sind, insbesondere übereinander an einem Ferritkern 22 angeordnet sind, wie beispielhaft in Fig. 3a-3b dargestellt.

Ein Orientierungsmittel 20 umfassend einen ersten RFID-Transponder 3 und/oder einen zweiten RFID-Transponder 5 in einem Bodenbereich 10 vorgesehen sind, insbesondere unter einen Oberflächenfahrbereich 11 versenkt, wobei die Transponder beispielhaft ineinander angeordnet sind.

Fig. 1b zeigt eine Ausschnitt einer erfindungs- gemäßen Vorrichtung 1, umfassend einen ersten RFID-Transponder 3 mit einer ersten Transponderfrequenz 4, und einen zweiten RFID-Transponder 5 mit einer zweiten Transponderfrequenz 6, der dem ersten RFID-Transponder 3 zugeordnet ist, wobei die Transponder 3, 5 beispielhaft übereinander versetzt angeordnet sind, insbesondere auf einem oder mehreren, insbesondere zwei Ferritkernen.

Fig. 1c zeigt eine Ausschnitt erfindungsgemäßen Vorrichtung 1, umfassend einen ersten RFID-Transponder 3 und/oder einen zweiten RFID-Transponder 5, wobei die Transponder 3, 5 beispielhaft nebeneinander versetzt angeordnet sind, in einem beispielhaften Abstand 9.

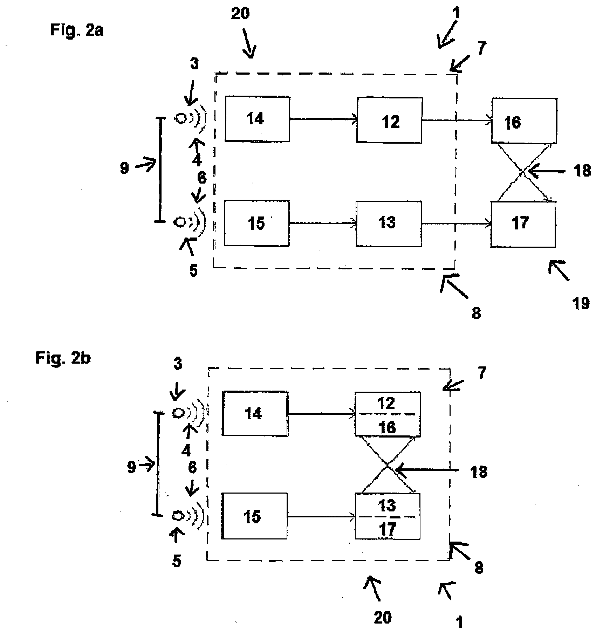

Fig. 2a zeigt eine schematische Darstellung einer erfindungsgemäße Vorrichtung 1 zur räumlichen Orientierung, wobei Fig. 2a beispielhaft eine zweikanalige Auswerteinheit mit einer externen Sicherheitsmoduleinheit 19 umfasst, die eine Überkreuzverschaltung 18 für eine externe zweikanalige Sicherheitsüberprüfung mit Kontrollmitteln 16, 17 mit Kreuzvergleich aufweist. Zwei RFID-Transponder sind beispielhaft schematisch in einem geringen Abstand 9 mit unterschiedlichen Transponderfrequenzen 4, 6 zur Eliminierung von Wechselwirkungen zwischen den Transpondern eingerichtet. Weiterhin sind beispielhaft zwei unabhängige Receiver 14, 15 zur parallelen Erfassung von zwei Transpondern unterschiedlicher Frequenz vorgesehen. Weiterhin sind zwei Mikrocontroller 12, 13 zur digitalen Auswertung der Transponder-Speicherinhalte und der ortsabhängigen Eigenschaften der Funkverbindung vorgesehen. Für eine Transponderanordnung mit vorbestimmtem Abstand 9, insbesondere bei dem die positionsabhängige Änderung der ortsabhängigen Eigenschaften sehr groß, insbesondere maximal, ist, kann die Position der Transponder genau bestimmt werden.

Fig. 2b zeigt eine schematische Darstellung einer erfindungsgemäße Vorrichtung 1 zur räumlichen Orientierung mit einer zweikanaligen Auswerteinheit mit interner Sicherheitseinheit, die eine Überkreuzverschaltung 18 für eine zweikanalige Sicherheitsüberprüfung mit Kontrollmitteln 16, 17 aufweist.

Fig. 3a, b zeigen eine erfindungsgemäße Vorrichtung mit zwei RFID-Transponder 3, 5 auf einem Ferritkern 22.

### BEZUGSZEICHENLISTE

- 1: Vorrichtung zur räumlichen Orientierung
- 2: Gabelstapler
- 3: ersten RFID-Transponder
- 4: ersten Transponderfrequenz
- 5: zweiten RFID-Transponder
- 6: zweiten Transponderfrequenz
- 7: erstes Detektionsmittel
- 8: zweites Detektionsmittel
- 9: Abstand
- 10: Bodenbereich
- 11: Oberflächenfahrbereich
- 12: ersten Mikrokontroller
- 13: zweiten Mikrokontroller
- 14: ersten Receiver
- 15: zweiten Receiver
- 16: erstes Kontrollmittel
- 17: zweites Kontrollmittel
- 18: Überkreuzverschaltung
- 19: Sicherheitsmoduleinheit
- 20: Orientierungsmittel
- 21: Detektionsvorrichtung
- 22: Ferritkern

## Patentansprüche

1. Vorrichtung (1) zur räumlichen Orientierung für ein bewegtes Objekt, insbesondere ein Fahrzeug, insbesondere ein Flurförderfahrzeug, insbesondere Gabelstapler (2), umfassend
- zumindest einen ersten RFID-Transponder (3) mit einer ersten Transponderfrequenz (4),
- zumindest einen zweiten RFID-Transponder (5) mit einer zweiten Transponderfrequenz (6), der dem ersten RFID-Transponder (3) zugeordnet ist,
- zumindest ein erstes Detektionsmittel (7) zum Detektieren des ersten RFID-Transponders (3) mit der ersten Transponderfrequenz (4),
- zumindest ein zweites Detektionsmittel (8) zum Detektieren des zweiten RFID-Transponders (5) mit der zweiten Transponderfrequenz (6), das dem ersten Detektionsmittel (7) zugeordnet ist,
wobei eine Detektion des ersten RFID-Transponders (3) und/oder des zweiten RFID-Transponders (5) durch das erste Detektionsmittel (7) und/oder das zweite Detektionsmittel (8) im Wesentlichen örtlich und/oder zeitlich miteinander korreliert ausgebildet ist als abgesichertes Orientierungsmittel für das bewegte Objekt, insbesondere Fahrzeug, insbesondere Flurförderfahrzeug, insbesondere Gabelstapler,
**dadurch gekennzeichnet, dass** zwischen der zweiten Transponderfrequenz (6) des zweiten RFID-Transponders (5) und der ersten Transponderfrequenz (4) des ersten RFID-Transponders (3) eine Frequenzdifferenz besteht.

2. Vorrichtung nach Anspruch 1, **dadurch gekennzeichnet, dass** der erste RFID-Transponder (3) und der zweite RFID-Transponder (5) in einem vorbestimmten, geringen Abstand (9), insbesondere einige cm, insbesondere weniger als 10 mm, zueinander angeordnet sind, so dass ein im Wesentlichen zeitgleiches und/oder vorbestimmt beabstandetes Detektieren durch die Detektionsmittel (7, 8) ermöglicht ist, und/oder die RFID-Transponder (3, 5) insbesondere ineinander verschachtelt und/oder übereinander angeordnet sind, insbesondere übereinander an einem gemeinsamen Ferritkern (22) angeordnet sind.

3. Vorrichtung nach Anspruch 2, **dadurch gekennzeichnet, dass** der erste RFID-Transponder (3) und der zweite RFID-Transponder (5) übereinander versetzt oder nebeneinander versetzt auf einem oder mehreren Ferritkernen, insbesondere zwei Ferritkernen angeordnet sind.

4. Vorrichtung nach einem der Ansprüche 1 bis 3, **dadurch gekennzeichnet, dass** die erste Transponderfrequenz (4) eine Niederfrequenz und die zweite Transponderfrequenz (6) eine Hochfrequenz umfasst, insbesondere etwa 125 kHz und etwa 13,56 MHz.

5. Vorrichtung nach einem der Ansprüche 1 bis 4, **dadurch gekennzeichnet, dass** der erste RFID-Transponder (3) und/oder der zweite RFID-Transponder (5) in einem Bodenbereich (10) vorgesehen sind, insbesondere unter einen Oberflächenfahrbereich (11) versenkt, und/oder in einen Seitenbereich, insbesondere in einer Höhe, die mit einem Detektionsmittel (7, 8) korrespondiert, und/oder in einem Deckenbereich.

6. Vorrichtung nach einem der Ansprüche 1 bis 5, **dadurch gekennzeichnet, dass** das erste Detektionsmittel (7) und/oder zweite Detektionsmittel (8) einen ersten Receiver (14) und zweiten Receiver (15) aufweisen, die insbesondere ineinander verschränkt angeordnet sind, insbesondere in Form einer äußeren Spule und einer inneren Spule und/oder mit einem vorbestimmten Versatz zueinander angeordnet sind.

7. Vorrichtung nach einem der Ansprüche 1 bis 6, **dadurch gekennzeichnet, dass** das erste Detektionsmittel (7) und/oder zweite Detektionsmittel (8) jeweils zumindest einen ersten Mikrokontroller (12) und/oder einen zweiten Mikrokontroller (13) aufweisen und/oder die Ergebnisse des ersten Detektionsmittels (7) und/oder zweiten Detektionsmittels (8) über ein erstes Kontrollmittel (16) und/oder zweites Kontrollmittel (17) zur Überprüfung mittels einer Überkreuzverschaltung (18) zu überprüfen sind, ins- besondere integriert in die Detektionsmittel oder als ergänzte Sicherheitsmoduleinheit (19) und/oder das erste Detektionsmittel (7) und/oder zweite Detektionsmittel (8) ein erstes und/oder zweites Sendemittel für die erste Transponderfrequenz (3) und/oder zweite Transponderfrequenz (4) zum Senden an den ersten RFID-Transponder und/oder zweiten RFID-Transponder aufweisen.

8. Vorrichtung nach einem der Ansprüche 1 bis 7, **dadurch gekennzeichnet, dass** ein erstes Auswertemittel und/oder ein zweites Auswertemittel in dem ersten (7) und/oder zweiten Detektionsmittel (8) zur Auswertung einer Signalstärke eines ersten und/oder zweiten Transpondersignals mit der ersten und/oder zweiten Transponderfrequenz vorgesehen ist, insbesondere Mikrokontroller (12, 13), wobei eine ortsabhängige Kopplung zwischen dem ersten und/oder zweiten RFID-Transponder und dem Auswertemittel vornehmbar ist, insbesondere mittels einer Signalauswertung zur Bestimmung von Positionen des ersten und/oder zweiten Transpondermittels.

9. Orientierungsmittel (20) für ein bewegtes Objekt, insbesondere ein Fahrzeug, insbesondere ein Flurförderfahrzeug, insbesondere einen Gabelstapler (2), angeordnet insbesondere in einem Bodenbereich (10), insbesondere versenkt, und/oder in einer seitlichen Anbringung und/oder Deckenanbringung, umfassend einen ersten RFID-Transponder (3) mit einer ersten Transponderfrequenz (4) und einen zweiten RFID-Transponder (5) mit einer zweiten Transponderfrequenz (6), wobei der erste RFID- Transponder (3) und der zweite RFID-Transponder (5) in einem vorbestimmten, geringen Abstand (9) zueinander angeordnet sind, insbesondere ineinander verschachtelt und/oder übereinander angeordnet sind, insbesondere übereinander an einem Ferritkern (22), wobei zwischen der ersten Transponderfrequenz (4) und zweiten Transponderfrequenz (6) eine Frequenzdifferenz besteht, insbesondere dass die erste Transponderfrequenz (4) eine Niederfrequenz und die zweite Transponderfrequenz (6) eine Hochfrequenz umfasst, insbesondere etwa 125 kHz und etwa 13,56 MHz und/oder der erste RFID-Transponder (3) und/oder der zweite RFID-Transponder (5) in einem Bodenbereich (10) und/oder seitliche Anbringung vorgesehen sind, insbesondere unter einen Oberflächenfahrbereich (11) versenkt, und/oder in einen Seitenbereich und/oder in einem Deckenbereich.

10. Detektionsvorrichtung (21) umfassend ein erstes Detektionsmittel (7) zum Detektieren eines ersten RFID-Transponders (3) mit einer ersten Transponderfrequenz (4), zumindest ein zweites Detektionsmittel (8) zum Detektieren eines zweiten RFID-Transponders (5) mit einer zweiten Transponderfrequenz (6), das dem ersten Detektionsmittel (7) zugeordnet ist,
wobei das erste Detektionsmittel (7) und/oder zweite Detektionsmittel (8) ineinander verschränkt angeordnet ist, insbesondere einen ersten Receiver (14) und zweiten Receiver (15) aufweisen, die ineinander angeordnet sind, insbesondere in Form einer äußeren Spule und einer inneren Spule, wobei das erste Detektionsmittel (7) und/oder zweite Detektionsmittel (8) insbesondere jeweils zumindest einen Mikrokontroller (12, 13) aufweisen und/oder die Ergebnisse des ersten und/oder zweiten Detektionsmittels (7, 8) über ein Kontrollmittel (16, 17) zur Überprüfung mittels einer Überkreuzverschaltung (18) zu überprüfen sind, insbesondere integriert zu den Detektionsmitteln (7, 8) oder als ergänzte Sicherheitsmoduleinheit (19) und/oder das erste und/oder zweite Detektionsmittel ein erstes und/oder zweites Sendemittel für die erste und/oder zweite Transponderfrequenz zum Senden an den ersten und/oder zweiten RFID-Transponder aufweisen,
wobei zwischen der zweiten Transponderfrequenz (6) des zweiten RFID-Transponders (5) und der ersten Transponderfrequenz (4) des ersten RFID-Transponders (3) eine Frequenzdifferenz besteht.

11. Detektionsvorrichtung nach Anspruch 10, **dadurch gekennzeichnet dass** sie in einem im Wesentlichen einseitig, zu den RFID-Transpondern (3, 5) hin geöffneten Metallgehäusemittel angeordnet ist.

12. Verwendung einer Vorrichtung zur räumlichen Orientierung für ein bewegtes Objekt, insbesondere ein Fahrzeug, insbesondere Flurförderfahrzeug, insbesondere Gabelstapler, umfassend
- zumindest einen ersten RFID-Transponder (3) mit einer ersten Transponderfrequenz (4),
- zumindest einen zweiten RFID-Transponder (5) mit einer zweiten Transponderfrequenz (6), der dem ersten RFID-Transponder (3) zugeordnet ist,
- zumindest ein erstes Detektionsmittel (7) zum Detektieren des ersten RFID-Transponders (3) mit der ersten Transponderfrequenz,
- zumindest ein zweites Detektionsmittel (8) zum Detektieren des zweiten RFID-Transponders (5) mit der zweiten Transponderfrequenz, das dem ersten Detektionsmittel zugeordnet ist,
wobei eine Detektion des ersten RFID-Transponders (3) und/oder des zweiten RFID-Transponders (5) durch das erste Detektionsmittel (7) und/oder das zweite Detektionsmittel (8) im Wesentlichen örtlich und/oder zeitlich miteinander korreliert ausgebildet ist als abgesichertes Orientierungsmittel für das bewegte Objekt, insbesondere das Fahrzeug, insbesondere Flurförderfahrzeug, insbesondere Gabelstapler,
**dadurch gekennzeichnet, dass** zwischen der zweiten Transponderfrequenz (6) des zweiten RFID-Transponders (5) und der ersten Transponderfrequenz (4) des ersten RFID-Transponders (3) eine Frequenzdifferenz besteht.

13. Verfahren zum Detektieren unter Verwendung einer Vorrichtung (1) zur räumlichen Orientierung für ein bewegtes Objekt, insbesondere ein Fahrzeug, insbesondere Flurförderfahrzeug, insbesondere Gabelstapler (2), nach einem der Ansprüche 1 bis 8, umfassend
- zumindest einen ersten RFID-Transponder (3) mit einer ersten Transponderfrequenz,
- zumindest einen zweiten RFID-Transponder (5) mit einer zweiten Transponderfrequenz, der dem ersten RFID-Transponder (3) zugeordnet ist,
- zumindest ein erstes Detektionsmittel (7) zum Detektieren des ersten RFID-Transponders (3) mit der ersten Transponderfrequenz,
- zumindest ein zweites Detektionsmittel (8) zum Detektieren des zweiten RFID-Transponders (5) mit der zweiten Transponderfrequenz, das dem ersten Detektionsmittel zugeordnet wird,
wobei zwischen der zweiten Transponderfrequenz (6) des zweiten RFID-Transponders (5) und der ersten Transponderfrequenz (4) des ersten RFID-Transponders (3) eine Frequenzdifferenz besteht,
wobei durch eine Detektion des ersten RFID-Transponders (3) und/oder des zweiten RFID-Transponders (5) durch das erste Detektionsmittel (7) und/oder das zweite Detektionsmittel (8) eine im Wesentlichen örtliche und/oder zeitliche Bestimmung und Abgleich von Zeit- und/oder Ortsfunktionen der RFID-Transponder vorgenommen wird als abgesichertes Orientierungsmittel für das Fahrzeug, insbesondere Flurförderfahrzeug, insbesondere Gabelstapler, wobei eine Detektion der Transponderfrequenzsignale insbesondere durch zwei ineinander und/oder übereinander angeordneten Spulen, insbesondere auf einem Ferritkern angeordnet, vorgenommen wird.

## Claims

1. A device (1) for spatial orientation for a moving object, in particular a vehicle, in particular an industrial truck, in particular a forklift (2), comprising
- at least one first RFID transponder (3) with a first transponder frequency (4),
- at least one second RFID transponder (5) with a second transponder frequency (6) with which the first RFID transponder (3) is associated,
- at least one first detection means (7) for detecting the first RFID transponder (3) with the first transponder frequency (4),
- at least one second detection means (8) for detecting the second RFID transponder (5) with the second transponder frequency (6) with which the first detection means is associated (7),
wherein a detection of the first RFID transponder (3) and/or of the second RFID transponder (5) by the first detection means (7) and/or the second detection means (8) is designed to be substantially spatially and/or temporally correlated with one another as a secure means of orientation for the moving object, in particular vehicle, in particular industrial truck, in particular forklift,
**characterized in that** there is a frequency difference between the second transponder frequency (6) of the second RFID transponder (5) and the first transponder frequency (4) of the first RFID transponder (3).

2. The device as set forth in claim 1, **characterized in that** the first RFID transponder (3) and the second RFID transponder (5) are arranged at a predetermined, short distance (9) from one another, in particular a few cm, in particular less than 10 mm, so that substantially simultaneous and/or predeterminedly distanced detection is made possible by the detection means (7, 8), and/or the RFID transponders (3, 5) are particularly nested in one another and/or arranged one above the other, in particular arranged one above the other on a common ferrite core (22).

3. The device as set forth in claim 2, **characterized in that** the first RFID transponder (3) and the second RFID transponder (5) are arranged one above the other so as to be offset or next to one another so as to be offset on one or more ferrite cores, in particular two ferrite cores.

4. The device as set forth in any one of claims 1 to 3, **characterized in that** the first transponder frequency (4) includes a low frequency and the second transponder frequency (6) includes a high frequency, in particular approximately 125 kHz and approximately 13.56 MHz.

5. The device as set forth in any one of claims 1 to 4, **characterized in that** the first RFID transponder (3) and/or the second RFID transponder (5) are provided in a floor area (10), in particular sunk under a surface driving area (11), and/or into a side area, in particular at a height that corresponds to a detection means (7, 8), and/or into a ceiling area.

6. The device as set forth in any one of claims 1 to 5, **characterized in that** the first detection means (7) and/or second detection means (8) have a first receiver (14) and a second receiver (15) which are arranged particularly in an interleaved manner, in particular in the form of an outer coil and an inner coil, and/or are arranged with a predetermined offset relative to one another.

7. The device as set forth in any one of claims 1 to 6, **characterized in that** the first detection means (7) and/or second detection means (8) each have at least one first microcontroller (12) and/or second microcontroller (13) and/or the results of the first detection means (7) and/or second detection means (8) are to be checked via a first control means (16) and/or second control means (17) by means of a crossover connection (18), in particular integrated into the detection means or as a supplemented security module unit (19) and/or the first detection means (7) and/or second detection means (8) have a first and/or second transmission means for the first transponder frequency (3) and/or second transponder frequency (4) for transmission to the first RFID transponder and/or second RFID transponder.

8. The device as set forth in any one of claims 1 to 7, **characterized in that** a first evaluation means and/or a second evaluation means, particularly microcontroller (12, 13), is provided in the first (7) and/or second detection means (8) for evaluating a signal strength of a first and/or second transponder signal with the first and/or second transponder frequency, it being possible for a location-dependent coupling to be established between the first and/or second RFID transponder and the evaluation means, particularly by means of a signal evaluation, in order to determine positions of the first and/or second transponder means.

9. An orientation means (20) for a moving object, in particular a vehicle, in particular an industrial truck, in particular a forklift (2), arranged in particular in a floor area (10), in particular countersunk, and/or in a lateral attachment and/or ceiling attachment, comprising a first RFID transponder (3) with a first transponder frequency (4) and a second RFID transponder (5) with a second transponder frequency (6), wherein the first RFID transponder (3) and the second RFID transponder (5) are arranged at a predetermined, short distance (9) from one another, in particular nested in one another and/or arranged one above the other, in particular one above the other on a ferrite core (22), there being a frequency difference between the first transponder frequency (4) and the second transponder frequency (6), in particular that the first transponder frequency (4) includes a low frequency and the second transponder frequency (6) includes a high frequency, in particular approximately 125 kHz and approximately 13.56 MHz, and/or the first RFID transponder (3) and/or the second RFID transponder ( 5) are provided in a floor area (10) and/or lateral attachment, in particular sunk under a surface driving area (11), and/or into a side area and/or into a ceiling area.

10. A detection device (21), comprising a first detection means (7) for detecting a first RFID transponder (3) with a first transponder frequency (4), at least one second detection means (8) for detecting a second RFID transponder (5) with a second transponder frequency (6) with which the first detection means (7) is associated,
wherein the first detection means (7) and/or second detection means (8) is arranged so as to be interleaved, in particular having a first receiver (14) and a second receiver (15) which are arranged one inside the other, in particular in the form of an outer coil and an inner coil, with the first detection means (7) and/or second detection means (8) in particular each having at least one microcontroller (12, 13) and/or the results of the first and/or second detection means (7, 8) being checked via a control means (16, 17) for checking by means of a crossover connection (18), in particular integrated with the detection means (7, 8) or as a supplemented security module unit (19), and/or the first and/or second detection means have a first and/or second transmission means for the first and/or second transponder frequency for transmission to the first and/or second RFID transponder,
there being a frequency difference between the second transponder frequency (6) of the second RFID transponder (5) and the first transponder frequency (4) of the first RFID transponder (3).

11. The detection device as set forth in claim 10, **characterized in that** it is arranged in a metal housing that is substantially open on one side toward the RFID transponders (3, 5).

12. Use of a device for spatial orientation for a moving object, in particular a vehicle, in particular an industrial truck, in particular a forklift, comprising
- at least one first RFID transponder (3) with a first transponder frequency (4),
- at least one second RFID transponder (5) with a second transponder frequency (6) with which the first RFID transponder (3) is associated,
- at least one first detection means (7) for detecting the first RFID transponder (3) with the first transponder frequency,
- at least one second detection means (8) for detecting the second RFID transponder (5) with the second transponder frequency with which the first detection means is associated,
wherein a detection of the first RFID transponder (3) and/or of the second RFID transponder (5) by the first detection means (7) and/or the second detection means (8) is designed to be substantially spatially and/or temporally correlated with one another as a secure means of orientation for the moving object, in particular vehicle, in particular industrial truck, in particular forklift,
**characterized in that** there is a frequency difference between the second transponder frequency (6) of the second RFID transponder (5) and the first transponder frequency (4) of the first RFID transponder (3).

13. A method for detection using a device (1) for spatial orientation for a moving object, in particular a vehicle, in particular an industrial truck, in particular a forklift (2), as set forth in any one of claims 1 to 8, comprising
- at least one first RFID transponder (3) with a first transponder frequency,
- at least one second RFID transponder (5) with a second transponder frequency with which the first RFID transponder (3) is associated,
- at least one first detection means (7) for detecting the first RFID transponder (3) with the first transponder frequency,
- at least one second detection means (8) for detecting the second RFID transponder (5) with the second transponder frequency with which the first detection means is associated,
there being a frequency difference between the second transponder frequency (6) of the second RFID transponder (5) and the first transponder frequency (4) of the first RFID transponder (3),
wherein a substantially spatial and/or temporal determination and comparison of temporal and/or location functions of the RFID transponder is carried out as a secure means of orientation for the moving object, in particular the vehicle, through a detection of the first RFID transponder (3) and/or of the second RFID transponder (5) by the first detection means (7) and/or the second detection means (8), with a detection of the transponder frequency signals being performed in particular by two coils that are arranged one inside the other and/or one above the other, in particular arranged on a ferrite core.

## Revendications

1. Dispositif (1) destiné à orienter spatialement un objet en mouvement, en particulier un véhicule, en particulier un convoyeur au sol, en particulier un chariot élévateur (2), ledit dispositif comprenant
- au moins un premier transpondeur RFID (3) ayant une première fréquence de transpondeur (4),
- au moins un deuxième transpondeur RFID (5) ayant une deuxième fréquence de transpondeur (6) et associé au premier transpondeur RFID (3),
- au moins un premier moyen de détection (7) destiné à détecter le premier transpondeur RFID (3) ayant la première fréquence de transpondeur (4),
- au moins un deuxième moyen de détection (8) destiné à détecter le deuxième transpondeur RFID (5) ayant la deuxième fréquence de transpondeur (6) et associé au premier moyen de détection (7),
une détection du premier transpondeurs RFID (3) et/ou celle du deuxième transpondeurs RFID (5) par le biais du premier moyen de détection (7) et/ou du deuxième moyen de détection (8) étant conçues, sensiblement localement et/ou de manière corrélées temporellement entre elles, comme un moyen d'orientation sécurisé pour l'objet en mouvement, en particulier un véhicule, en particulier un convoyeur au sol, en particulier un chariot élévateur,
**caractérisé en ce qu'**une différence de fréquence existe entre la deuxième fréquence de transpondeur (6) du deuxième transpondeur RFID (5) et la première fréquence de transpondeur (4) du premier transpondeur RFID (3).

2. Dispositif selon la revendication 1, **caractérisé en ce que** le premier transpondeur RFID (3) et le deuxième transpondeur RFID (5) sont disposés à une faible distance prédéterminée (9), en particulier quelques cm, en particulier moins de 10 mm, l'un par rapport l'autre, de sorte que les moyens de détection (7, 8) permettent une détection sensiblement simultanée et/ou espacée de manière prédéterminée et/ou les transpondeurs RFID (3, 5) sont notamment imbriqués l'un dans l'autre et/ou disposés l'un au-dessus de l'autre, en particulier sont disposés l'un au-dessus de l'autre au niveau d'un noyau de ferrite commun (22).

3. Dispositif selon la revendication 2, **caractérisé en ce que** le premier transpondeur RFID (3) et le deuxième transpondeur RFID (5) sont disposés de manière décalée l'unau-dessus de l'autres ou de manière décalée l'un à côté de l'autre sur un ou plusieurs noyaux de ferrite, notamment deux noyaux de ferrite.

4. Dispositif selon l'une des revendications 1 à 3, **caractérisé en ce que** la première fréquence de transpondeur (4) comprend une fréquence basse et la deuxième fréquence de transpondeur (6) comprend une fréquence haute, en particulier environ 125 kHz et environ 13,56MHz.

5. Dispositif selon l'une des revendications 1 à 4, **caractérisé en ce que** le premier transpondeur RFID (3) et/ou le deuxième transpondeur RFID (5) est prévue dans une zone de sol (10), en particulier noyés sous une zone de roulement en surface (11), et/ou dans une zone latérale, en particulier à une hauteur qui correspond à un moyen de détection (7, 8), et ou dans une zone de plafond.

6. Dispositif selon l'une des revendications 1 à 5, **caractérisé en ce que** le premier moyen de détection (7) et/ou le deuxième moyen de détection (8) comportent un premier récepteur (14) et un deuxième récepteur (15) qui sont disposés en particulier de manière entrecroisée, en particulier sont disposés sous la forme d'une bobine extérieure et d'une bobine intérieure et/ou avec un décalage prédéterminé l'un par rapport à l'autre.

7. Dispositif selon l'une des revendications 1 à 6, **caractérisé en ce que** le premier moyen de détection (7) et/ou le deuxième moyen de détection (8) comportent chacun au moins un premier microcontrôleur (12) et/ou un deuxième microcontrôleur (13) et/ou les résultats du premier moyen de détection (7) et/ou du deuxième moyen de détection (8) doivent être vérifiés par le biais d'un premier moyen de contrôle (16) et/ou d'un deuxième moyen de contrôle (17) pour effectuer la vérification au moyen d'un montage croisé (18), en particulier en étant intégrés dans les moyens de détection ou en tant qu'unité de module de sécurité ajoutée et/ou le premier moyen de détection (7) et/ou le deuxième moyen de détection (8) comportent un premier et/ou un deuxième moyen d'émission destinés à la première fréquence de transpondeur (3) et/ou à la deuxième fréquence de transpondeur (4) pour les envoyer au premier transpondeur RFID et/ou au deuxième transpondeur RFID.

8. Dispositif selon l'une des revendications 1 à 7, **caractérisé en ce que** un premier d'évaluation et/ou un deuxième moyen d'évaluation sont prévus dans le premier moyen de détection (7) et/ou le deuxième moyen de détection (8) pour évaluation une intensité de signal d'un premier signal de transpondeur et/ou d'un deuxième signal de transpondeur ayant la première fréquence de transpondeur et/ou la deuxième fréquence de transpondeur destiné, en particulier des microcontrôleurs (12, 13), un couplage, dépendant du lieu, étant réalisé entre le premier transpondeur RFID et/ou le deuxième transpondeur RFID et le moyen d'évaluation, en particulier au moyen d'une évaluation de signal pour déterminer des positions du premier moyen transpondeur et/ou du deuxième moyen transpondeur.

9. Moyen d'orientation (20) destiné à un Objet en mouvement, en particulier un Véhicule, en particulier un convoyeur au sol, en particulier un chariot élévateur (2), disposé en particulier dans une zone de sol (10), en particulier noyé, et/ou dans un élément rapporté latéral et/ou élément de plafond rapporté, comprenant un premier transpondeur RFID (3) ayant une première fréquence de transpondeur (4) et un deuxième transpondeur RFID (5) ayant une deuxième fréquence de transpondeur (6), le premier transpondeur RFID (3) et le deuxième transpondeur RFID (5) étant disposés à une faible distance prédéterminée (9) l'un à l'autre, en particulier imbriqués l'un dans l'autre et/ou disposés l'un au-dessus de l'autre, en particulier l'un au-dessus de l'autre au niveau d'un noyau de ferrite (22), une différence de fréquence existant entre la première fréquence e transpondeur (4) et la deuxième fréquence de transpondeur (6), en particulier la première fréquence de transpondeur (4) comprenant une fréquence basse et la deuxième fréquence de transpondeur (6) comprenant une fréquence haute, en particulier environ 125 kHz et environ 13,56 MHz et/ou le premier transpondeur RFID (3) et/ou le deuxième transpondeur RFID (5) étant prévus dans une zone de sol (10) et/ou un élément rapporté latéral, en particulier noyés au-dessous d'une zone de roulement en surface (11), et/ou dans une zone latéral et/ou dans une zone de plafond.

10. Dispositif de détection (21) comprenant un premier moyen de détection (7) destiné à détecter un premier transpondeurs RFID (3) ayant une première fréquence de transpondeur (4), au moins un deuxième moyen de détection (8) destiné à détecter un deuxième transpondeur RFID (5) ayant une deuxième fréquence de transpondeur (6) et associé au premier moyen de détection (7),
le premier moyen de détection (7) et/ou le deuxième moyen de détection (8) étant disposés de manière imbriquée l'un dans l'autre, en particulier comportant un premier récepteur (14) et un deuxième récepteur (15) qui sont disposés l'un dans l'autre, en particulier sous la forme d'une bobine extérieure et d'une bobine intérieure, le premiers moyen de détection (7) et/ou le deuxième moyen de détection (8) comportant en particulier chacun au moins un microcontrôleur (12, 13) et/ou les résultats des premier et/ou deuxième moyens de détection (7, 8) devant être vérifiés par le biais d'un moyen de contrôle (16, 17) pour effectuer la vérification au moyen d'un montage croisé (18), en particulier en étant intégrés dans les moyens de détection ou en tant qu'unité de module de sécurité ajoutée et/ou le premier moyen de détection et/ou le deuxième moyen de détection comportant un premier et/ou un deuxième moyen d'émission destinés à la première fréquence de transpondeur et/ou à la deuxième fréquence de transpondeur pour les envoyer au premier transpondeur RFID et/ou au deuxième transpondeur RFID,
une différence de fréquence existant entre la deuxième fréquence de transpondeur (6) du deuxième transpondeur RFID (5) et la première fréquence de transpondeur (4) du premier transpondeur RFID (3).

11. Dispositif de détection selon la revendication 10, **caractérisé en ce qu'**il est disposé dans un moyen formant boîtier métallique ouvert sensiblement d'un côté, en direction des transpondeurs RFID (3, 5).

12. Utilisation d'un dispositif destiné à orienter spatialement un objet en mouvement, en particulier un véhicule, en particulier un convoyeur au sol, en particulier un chariot élévateur (2), ledit dispositif comprenant
- au moins un premier transpondeur RFID (3) ayant une première fréquence de transpondeur (4),
- au moins un deuxième transpondeur RFID (5) ayant une deuxième fréquence de transpondeur (6) et associé au premier transpondeur RFID (3),
- au moins un premier moyen de détection (7) destiné à détecter le premier transpondeur RFID (3) ayant la première fréquence de transpondeur,
- au moins un deuxième moyen de détection (8) destiné à détecter le deuxième transpondeur RFID (5) ayant la deuxième fréquence de transpondeur et associé au premier moyen de détection,
une détection du premier transpondeurs RFID (3) et/ou celle du deuxième transpondeurs RFID (5) par le biais du premier moyen de détection (7) et/ou du deuxième moyen de détection (8) étant conçues, sensiblement localement et/ou de manière corrélées temporellement entre elles, comme un moyen d'orientation sécurisé pour l'objet en mouvement, en particulier un véhicule, en particulier un convoyeur au sol, en particulier un chariot élévateur,
**caractérisé en ce qu'**une différence de fréquence existe entre la deuxième fréquence de transpondeur (6) du deuxième transpondeur RFID (5) et la première fréquence de transpondeur (4) du premier transpondeur RFID (3).

13. Procédé de détection à l'aide d'un dispositif (1) destiné à orienter spatialement un objet en mouvement, en particulier un véhicule, en particulier un convoyeur au sol, en particulier un chariot élévateur (2), selon l'une des revendications 1 à 8, ledit dispositif comprenant
- au moins un premier transpondeur RFID (3) ayant une première fréquence de transpondeur,
- au moins un deuxième transpondeur RFID (5) ayant une deuxième fréquence de transpondeur (6) et associé au premier transpondeur RFID (3),
- au moins un premier moyen de détection (7) destiné à détecter le premier transpondeur RFID (3) ayant la première fréquence de transpondeur,
- au moins un deuxième moyen de détection (8) destiné à détecter le deuxième transpondeur RFID (5) ayant la deuxième fréquence de transpondeur et associé au premier moyen de détection,
une différence de fréquence existant entre la deuxième fréquence de transpondeur (6) du deuxième transpondeur RFID (5) et la première fréquence de transpondeur (4) du premier transpondeur RFID (3),
une détection du premier transpondeurs RFID (3) et/ou celle du deuxième transpondeurs RFID (5) effectuées par le biais du premier moyen de détection (7) et/ou du deuxième moyen de détection (8) permettant d'effectuer une détermination et un alignement de fonctions temporelles et/ou locales des transpondeurs RFID, comme un moyen d'orientation sécurisé pour le véhicule, en particulier le convoyeur au sol, en particulier le chariot élévateur, une détection des signaux de fréquence de transpondeur étant effectuée en particulier par le biais de deux bobines disposées l'une dans l'autre et/ou l'une au-dessus de l'autre, disposées en particulier sur un noyau de ferrite.
